# EUROPÄISCHE PATENTSCHRIFT

(11) **EP 3 473 858 B1**
(45) Veröffentlichungstag und Bekanntmachung des Hinweises auf die Patenterteilung: **01.07.2020**
(21) Anmeldenummer: 17196889.4
(22) Anmeldetag: 17.10.2017
(51) Int. Cl.: F04D 19/04, F16C 33/66, F04D 27/02, F04D 29/059, F04D 29/063, F16N 7/14, F16N 7/36, F16N 13/20

(54) **VERFAHREN ZUR LEBENSDAUEROPTIMIERUNG VON WÄLZLAGERN EINER VAKUUMPUMPE**
METHOD FOR OPTIMIZING THE LIFE CYCLE OF ROLLER BEARINGS OF A VACUUM PUMP
PROCÉDÉ D'OPTIMISATION DE DURÉE DE VIE DES PALIERS À ROULEAUX D'UNE POMPE À VIDE

(43) Veröffentlichungstag der Anmeldung: 24.04.2019
(73) Patentinhaber: PFEIFFER VACUUM GMBH, 35614 Asslar (DE)
(72) Erfinder: Schnarr, Johannes, 35625 Rechtenbach (DE); Stammler, Herbert, 35396 Gießen (DE)
(74) Vertreter: Manitz Finsterwald Patent- und Rechtsanwaltspartnerschaft mbB

(56) Entgegenhaltungen:
- EP-A1- 1 486 673
- EP-A2- 2 060 795
- WO-A1-2006/131694
- DE-A1-102014 118 881
- JP-A- 2002 061 592

## Beschreibung

Die vorliegende Erfindung betrifft ein Verfahren zum Betreiben einer Vakuumpumpe, insbesondere einer Turbomolekularpumpe, wobei die Vakuumpumpe zumindest einen Rotor mit einer Rotorwelle umfasst, die durch zumindest eine Lagereinheit drehbar gelagert ist und wobei der Rotor durch eine Motoreinheit zu einer Drehbewegung antreibbar ist.

Vakuumpumpen werden in unterschiedlichen technischen Prozessen eingesetzt, um ein für den jeweiligen Prozess notwendiges Vakuum zu schaffen. Eine Vakuumpumpe umfasst typischerweise ein Gehäuse, das einen Pumpenraum mit mindestens einer Rotorwelle einschließt. In dem Pumpenraum ist eine Pumpstruktur der Vakuumpumpe angeordnet, die ein in dem Pumpenraum bzw. in einem zu evakuierenden Rezipienten vorhandenes Gas von einem Einlass zu einem Auslass der Vakuumpumpe fördert und dadurch pumpt.

Turbomolekularpumpen sind kinetische Pumpen, bei denen in die Pumpe eintretende Gasmoleküle eines zu pumpenden Gases oder Mediums durch Impulsübertragung von den Rotorelementen und an die Statorelemente in eine Vorzugsrichtung bewegt werden. Die Pumpe enthält zumindest eine, üblicherweise jedoch mehrere Pumpstufen von in Reihe oder hintereinander angeordneten Rotorscheiben und Statorscheiben oder allgemein Rotor-/Statorelementen. Jede Pumpstufe besteht also in der Regel zumindest aus je einem Rotorelement und einem Statorelement, die paarweise angeordnet sind. Gegebenenfalls kann eine Pumpstufe auch nur aus einem Rotorelement bestehen, wobei dies insbesondere für die am stromabwärts gelegenen Ende befindliche Pumpstufe gilt. In diesem Fall endet die Pumpe mit einem Rotorelement. Aufgrund der Stellung von Rotor- und Statorelementen zueinander erhalten die Gasmoleküle eine Bewegungskomponente parallel zur Achse der Pumpe, wobei die Achse grundsätzlich im Wesentlichen der Rotationsachse der Rotorwelle entspricht. Generell erhöhen mehrere Pumpstufen den Druck des Gases von dem Einlass zum Auslass der Pumpe.

Die Lagerung der Rotorwelle erfolgt über zumindest eine Lagereinheit, wobei die Rotorelemente oder zumindest ihre Verbindungsbereiche zur Rotorwelle in den meisten Fällen zwischen den Lagereinheiten angeordnet sind. Die Lagereinheiten können als passive Permanentmagnetlager, aber auch als Wälzlager mit Wälzkörpern aus Materialien wie Keramik oder Stahl ausgebildet sein. Bei einer für das erfindungsgemäße Verfahren vorgesehenen Vakuumpumpe umfasst die zumindest eine Lagereinheit der Vakuumpumpe zumindest ein Wälzlager. Wälzlager werden üblicherweise an der am Auslass der Vakuumpumpe anliegenden Vorvakuumseite der Vakuumpumpe eingesetzt, wodurch die vorvakuumseitigen Lagereinheiten kostengünstig gestaltet werden können.

Wälzlager können mit Abstandshaltern für die Wälzkörper, sogenannten Lagerkäfigen, ausgestattet sein, die die Wälzkörper zumindest teilweise umfassen und somit für eine gewisse Führung der Wälzkörper entlang einer Laufbahn innerhalb des Wälzlagers sorgen. Die Lagerkäfige verhindern eine unmittelbare Berührung benachbarter Wälzkörper und bewirken einen gleichmäßigen Abstand der Wälzkörper über den Umfang der Laufbahn.

Ein Verfahren zum Betreiben einer Vakuumpumpe gemäß dem Oberbegriff des Anspruchs 1 ist aus der DE 10 2014 118881 A1 bekannt. Beispiele von Vakuumpumpen finden sich in der EP 1 486 673 A1, EP 2 060 795 A2 und WO 2006/131694 A1.

Nachteilig erweist sich jedoch, dass Wälzlager mit Lagerkäfigen geringere spezifische Belastbarkeiten aufweisen, was sich u.a. aus einer geringeren Anzahl an im Eingriff befindlichen Wälzkörpern gegenüber Wälzlagern ohne Lagerkäfigen ergibt. Mit anderen Worten vermindern die Lagerkäfige das zur Verfügung stehende Volumen innerhalb des Wälzlagers, wodurch die Belastbarkeit gegenüber vergleichbar dimensionierten Wälzlagern ohne Lagerkäfigen, sogenannten vollkugeligen oder vollrolligen Wälzlagern, herabgesetzt wird. In Zahlen ausgedrückt weisen Wälzlager mit Lagerkäfigen in Vergleich zu gleichdimensionierten Wälzlagern ohne Lagerkäfigen eine geringere sogenannte dynamische Tragzahl auf, wobei die dynamische Tragzahl die konstante Belastung beschreibt, bei der das Wälzlager eine nominelle Lebensdauer von z.B. einer Million Umdrehungen erreicht.

Wälzlager können mit einer Umlaufschmierung mit dünnflüssigem Schmiermittel, vorzugsweise mit natürlichen Ölen oder synthetischen Schmiermitteln geschmiert werden. In diesem Fall wird das Schmiermittel üblich in einem dem Wälzlager benachbarten Bereich in einem Hohlraum oder einem saugfähigen Material bevorratet oder aufgefangen und mit einer elektrischen Schmiermittelpumpe oder einer passiven, bevorzugt durch Kapillar- und/oder Fliehkräfte wirkenden Zuführeinrichtung dem Wälzlager stetig oder dosiert zugegeben.

Alternativ kann eine Dauerschmierung des Wälzlagers mit dickflüssigen oder pastösen, nicht fließfähigen Schmiermitteln, vorzugsweise natürlichen oder synthetischen Fetten vorgenommen werden. Das Wälzlager kann zur Aufnahme des Schmiermittels ein- oder beidseitig an seinen Stirnseiten zwischen einem Innen- und Außenring mit Dichtelementen versehen sein, die insbesondere als Deckscheibe oder Berührungsdichtung ausgeführt sind. Diese Dichtelemente können durch Stoff- oder Formschluss fest oder beweglich an mindestens einem Bestandteil des Wälzlagers fixiert sein, um das Herauswandern des Schmiermittels aus dem Bereich des Lagers zu verhindern, in dem sich die zu schmierenden Wälzkörper befinden. Die einmalige, für einen definierten Betriebszeitraum ausreichende Füllung mit Schmiermittel erfolgt in dem zwischen Innen- und Außenring, Dichtelementen, Wälzkörpern und eventuell vorhandenem Lagerkäfig befindlichen freien Volumen. Für niedrige gewünschte Betriebsdrehzahlen des Rotors wird das freie Volumen möglichst vollständig mit Schmiermittel gefüllt. Für höhere Betriebsdrehzahlen des Rotors erfolgt die Füllung nicht vollständig, sondern nur bis zu einem Anteil des verfügbaren Volumens von zwischen 20% und 80%, vorzugsweise bis zu einem Anteil von 30% bis 50%.

Nachteilig erweist sich jedoch, dass Wälzlager mit Dauerschmierung schlechte Warmlaufeigenschaften aus dem Stillstand aufweisen, was sich insbesondere bei der Verwendung eher dickflüssiger Schmiermittel bemerkbar macht. Auch können sich hohe Füllstände des Schmiermittels im Wälzlager negativ auf die Warmlaufeigenschaften aus dem Stillstand auswirken. Weiterhin können bei dünnflüssigeren Schmiermitteln erhöhte Leckageverluste auftreten, entweder wenn das Schmiermittel von Natur aus dünnflüssig ist oder wenn es erst durch eine starke Erwärmung bei Betrieb der Pumpe dünnflüssig geworden ist. Dadurch können die Schmiermittel die Dichtspalte der Deckscheibe oder der Berührungsdichtung überwinden und aus dem inneren, freien Volumen des Wälzlagers heraustreten.

Genau wie bei geringen absoluten Schmiermittelmengen bzw. Füllständen führt dies zu einem frühzeitigem Verschleiß des Schmiermittels, da durch eine zu geringe absolut vorhandene Schmiermittelmenge das Schmiermittel häufiger als vorgesehen aktiv schmierend im Eingriff ist, was in der Folge auch den Verschleiß des Wälzlagers beschleunigt.

Insbesondere bei der Ausbildung des zumindest einen Wälzlagers als vollkugeliges/vollrolliges Lager ergibt sich jedoch die Schwierigkeit, dass solche Lager einen erhöhten Verschleiß bei häufigem Anlauf aus dem Stillstand aufweisen. Denn während der Anlaufzeit, d.h. solange sich die Wälzkörper noch nicht gleichmäßig über den Umfang der Laufbahn des Lagers verteilt haben, neigen die Wälzkörper dazu, gegeneinander zu stoßen und direkt aneinander zu reiben.

Hinsichtlich des Schmiermittels ergibt sich bei dauergeschmierten Wälzlagern die Schwierigkeit, dass sich in einem Warmlaufzeitraum das Schmiermittel bei jedem Anlauf aus dem Stillstand neu im inneren freien Volumen des Wälzlagers optimal verteilen muss. Gegebenenfalls kann das Schmiermittel im Stillstand bei kaltem Wälzlager aufgrund der Temperaturabhängigkeit der Viskosität des Mittels zäh- oder dickflüssig sein, was den Anlaufvorgang zusätzlich erschweren und verlängern kann.

In diesem Warmlaufzeitraum liegt typischerweise keine optimale Schmierung des Wälzlagers vor, was zu erhöhtem Verschleiß des Wälzlagers führen kann. Dabei ist zu berücksichtigen, dass das Hochfahren einer Vakuumpumpe mit den währenddessen ablaufenden dynamischen Prozessen (etwa das Durchfahren von Eigenfrequenzen des Systems) einen Lastfall mit höchster Beanspruchung des Wälzlagers darstellt. In diesem Lastfall wird typischerweise die höchste Traglast des Wälzlagers benötigt, wobei diese während des Warmlaufens jedoch nur mit noch nicht optimaler Schmierung bereitgestellt werden kann, was in der Folge zu frühzeitigem Verschleiß führen kann.

Der Erfindung liegt daher die Aufgabe zugrunde, ein Verfahren zu schaffen, durch die der Betrieb einer Vakuumpumpe wartungs- und verschleißarm und kostengünstig gestaltet werden kann.

Die Aufgabe wird durch ein Verfahren mit den Merkmalen des Anspruchs 1 und insbesondere dadurch gelöst, dass die Motoreinheit zum Antrieb des Rotors mittels einer Steuereinheit in einem lastfreien Betriebsmodus der Vakuumpumpe derart angesteuert wird, dass der Rotor sich mit einer Minimaldrehzahl dreht.

Dadurch bleiben die Wälzköper des Wälzlagers dauerhaft in Bewegung und behalten - wie auch das Schmiermittel - eine gleichmäßige Verteilung über die Laufbahn des Lagers bei, was ein gegeneinander Stoßen und aneinander Reiben der Wälzköper verhindert und somit den Verschleiß vermindert. Die Minimaldrehzahl ist die Drehzahl, bei der die Wälzköper des Wälzlagers dauerhaft, bevorzugt gleichmäßig in Bewegung bleiben und bei denen gegenseitige Kontakte vermieden werden, oder die Drehzahl, bei der das Schmiermittel optimal im Wälzlager verteilt bleibt, bevorzugt eine Mindest-Betriebstemperatur und damit eine Mindestschmierfähigkeit behält. Die Minimaldrehzahl ist von verschiedenen (geometrischen) Eigenschaften des eingesetzten Wälzlagers / der eingesetzten Wälzkörper und/oder den (physikalischen) Eigenschaften des eingesetzten Schmiermittels abhängig und ist spezifisch für jede Ausführung zu ermitteln, zum Beispiel durch Berechnungen und/oder Experimente mit ausreichender Stichprobengröße.

Eine vollkugelige oder vollrollige Ausgestaltung des Wälzlagers ermöglicht die Verwendung einer kleiner dimensionierten und kompakteren Lagereinheit, wodurch sich die Vakuumpumpe kostengünstiger und kompakter herstellen lässt. Alternativ kann bei gleichbleibenden Dimensionen der Lagereinheit eine erhöhte Belastbarkeit und damit einhergehend eine Erweiterung des zulässigen Betriebsbereichs der Vakuumpumpe und damit eine Aufwertung erzielt werden. Durch den erfindungsgemäßen lastfreien Betriebsmodus lässt sich der Betrieb dieser vollkugeligen oder vollrolligen Wälzlager in der Vakuumpumpe verschleißarm gestalten, was die Lebensdauer und die Wartungsintervalle der Wälzlager verlängert und einen kostengünstigeren Betrieb der Vakuumpumpe ermöglicht.

Bei einer dauergeschmierte Ausgestaltung des Wälzlagers wird darüber hinaus eine Reduzierung des Bauraumbedarfs durch den Wegfall der Schmiermittelzuführeinrichtung ermöglicht, wodurch sich die Vakuumpumpe kostengünstiger und kompakter herstellen lässt.

Gemäß einer Ausführungsform wird die Drehzahl des Rotors bei einem zyklischen Betrieb der Vakuumpumpe mit Wechseln zwischen einem lastfreien Betriebsmodus und einem Betriebsmodus unter Last von einer Minimaldrehzahl auf eine Nenndrehzahl gebracht, und umgekehrt. In dem zyklischen Betrieb der Vakuumpumpe wird die Vakuumpumpe regelmäßig stillgesetzt, d.h. sie wechselt zyklisch zwischen einem lastfreien Betrieb und einem Betrieb unter Last. Zyklisch bedeutet aber nicht zwingend, dass die Amplitude und/oder Periode der einzelnen Zyklen stets identisch sind. Diese Parameter können bedarfsgerecht variieren. Im lastfreien Betrieb kann sich der Pumpenraum der Vakuumpumpe in einem gefluteten Zustand befinden, um das Einführen eines Objekts oder das Ersetzen eines Objekts in einen der Vakuumpumpe zugeordneten Rezipienten während eines Belade- oder Umladevorgangs zu ermöglichen. Während dieses Vorgangs dreht sich der Rotor der Vakuumpumpe mit einer Minimaldrehzahl, was gewährleistet, dass die Wälzkörper des Wälzlagers (z.B. ein vollkugeliges Kugellager) ständig in Bewegung bleiben oder das Schmiermittel ständig gut verteilt und bevorzugt eine Mindestbetriebstemperatur hält. In dem folgenden Zyklusschritt wird zur Erzeugung eines Vakuums die Rotordrehung - kontinuierlich und/oder in diskreten Schritten - von der Minimaldrehzahl auf die Nenndrehzahl erhöht, woraufhin die Vakuumpumpe das erforderliche Vakuum im Rezipienten erzeugt. Durch den lastfreien Betriebsmodus kann hierbei ein Anlauf des Rotors aus dem Stillstand vermieden werden, was eine verkürzte Reaktionszeit bis zur Betriebsfähigkeit, einen verschleißarmen Übergang in den Betriebsmodus unter Last und einen wartungsarmen Betrieb der Vakuumpumpe ermöglicht.

Erfindungsgemäß ist die Minimaldrehzahl des Rotors weniger als 10%, insbesondere weniger als 5%, bevorzugt weniger als 3% der Nenndrehzahl beträgt. Die Minimaldrehzahl des Rotors beträgt mehr als 0,1%, insbesondere mehr als 0,5% der Nenndrehzahl. Beispielsweise liegt die Minimaldrehzahl in einem Bereich von 0,1% bis 5% oder 0,5% bis 3% der Nenndrehzahl.

Bei Drehzahlen kleiner als etwa 0,1% der Nenndrehzahl besteht die Möglichkeit, dass die Wälzkörper oder das Schmiermittel nicht mehr in einer gleichmäßigen Verteilung entlang der Laufbahn des Wälzlagers gehalten werden und anfangen, gegeneinander zu stoßen oder aneinander zu reiben oder sich absetzen. Dagegen kann die Vakuumpumpe bei Minimaldrehzahlen größer als 10% der Nenndrehzahl bei geflutetem Pumpenraum übermäßig beansprucht werden, was sich insbesondere durch eine über eine vorgegebene Sicherheitsgrenze erhöhte Pumpen- oder Rotortemperatur ausdrücken kann. Um einen sicheren Betrieb zu gewährleisten, ist eine Minimaldrehzahl unter 5% der Nenndrehzahl vorteilhaft, wobei die Minimaldrehzahlen bevorzugt unter 3%, (bei Bedarf unter 1%) der Nenndrehzahl liegen kann. Untere Grenzen für die Minimaldrehzahl sind 0,1% oder 0,5% der Nenndrehzahl. Alternativ kann die Maximaldrehzahl anstatt der Nenndrehzahl gewählt werden.

Gemäß einer Ausführungsform liegt in dem lastfreien Betriebsmodus an einem Einlass der Vakuumpumpe Atmosphärendruck an. Im zyklischen Betrieb kann es erforderlich sein, den Pumpenraum der Vakuumpumpe und den Rezipienten beim Belade- oder Umladevorgang (vollständig) zu fluten, wodurch sich am Einlass der Vakuumpumpe Atmosphärendruck einstellt. Für einen störungsfreien Betrieb im lastfreien Betriebsmodus ist die Minimaldrehzahl des Rotors so gewählt, dass der Rotor auch unter Atmosphärendruck dauerhaft in Bewegung bleiben kann und nicht übermäßig beansprucht wird.

Bevorzugt ist das Wälzlager - wie bereits beispielhaft erwähnt - ein vollkugliges Kugellager oder ein vollrolliges Wälzlager. Dies ermöglicht die Verwendung kleiner dimensionierter Lagereinheiten bei gleichzeitigem Erhalt ihrer spezifischen Belastbarkeit, was die Herstellung der Vakuumpumpe kostengünstiger gestaltet.

Das zumindest eine Wälzlager kann im Bereich der Wälzkörpern mit einem Dauerschmiermittel, insbesondere Fett, zumindest teilweise gefüllt und geschmiert sein. Das Wälzlager kann nach außen hin abgedichtet sein. In Beziehung auf den Verschleiß des Schmiermittels erweist sich der erfindungsgemäße lastfreie Betriebsmodus als vorteilhaft. Durch die dauerhafte Bewegung des Wälzlagers kann das Auskühlen des Schmiermittels vermieden und die gleichmäßige Verteilung des Schmiermittels im Lager erhalten werden, so dass das Schmiermittel und das Wälzlager belastende thermische Zyklen vermieden werden.

Vorteilhafterweise ist eine erste Lagereinheit zur Lagerung der Rotorwelle dem Hochvakuumbereich, insbesondere dem wenigstens einem Einlass zugeordnet und eine zweite Lagereinheit zur Lagerung der Rotorwelle dem Vorvakuumbereich, insbesondere dem wenigstens einem Auslass zugeordnet, wobei die erste Lagereinheit, ein schmiermittelfreies Lager, insbesondere ein Permanentmagnetlager ist. Hierbei können an der am Einlass der Vakuumpumpe anliegenden Hochvakuumseite der Vakuumpumpe bevorzugt passive Permanentmagnetlager eingesetzt werden, die schmiermittel-, verschleiß- und wartungsfrei betrieben werden können, wodurch die Gefahr einer Kontamination des Hochvakuums durch aus der Lagereinheit austretendes Schmiermittel minimiert wird.

Alternativ zu den genannten Lagertypen können eine oder mehrere der Lagereinheiten durch aktive, elektrisch betriebene Magnetlager ersetzt werden, die schmiermittel-, verschleiß- und wartungsfrei arbeiten. Typisch weisen diese jedoch gegenüber den anderen Lagertypen eine deutlich geringere spezifische Belastbarkeit und einen hohen sekundären Aufwand zur aktiven elektrischen Regelung auf, so dass diese Bauform nur bei speziellem Bedarf gewählt wird.

Gemäß einer Ausführungsform sind zumindest zwei Lagereinheiten entfernt von der Hochvakuumseite des Rotors angeordnet. Vorzugsweise sind die Lagereinheiten auf der Vorvakuumseite angeordnet und können zumindest teilweise oder vollständig als kostengünstige Wälzlager ausgeführt werden. Dabei kann die Rotorwelle durch eine sogenannte fliegende oder auch auskragende Lagerung gelagert werden, wobei zumindest ein Teil der Rotorelemente in axialer Richtung der Rotorwelle nicht zwischen, sondern außerhalb der Lagereinheiten an einem durch die Lagereinheiten hindurch ragenden Rotorwellenende angeordnet sind.

Gemäß einer Ausführungsform sind zusätzliche Betriebsmodi vorgesehen, bei denen die Drehzahl des Rotors zwischen der Minimaldrehzahl und der Nenndrehzahl und/oder der Maximaldrehzahl liegt. Diese Betriebsmodi können einen Betriebsmodus umfassen, der nicht die volle Vakuumleistung (Saugvermögen und Kompression) der Vakuumpumpe bereitstellt und bei denen der Rotor bei einer niedrigeren Drehzahl, beispielsweise im Bereich von 60% bis 75% der Nenndrehzahl, betrieben wird. Dieser Betriebsmodus kann zur Erhaltung eines Vakuums bei längeren Mess-/Prozesspausen dienen, aber auch bei Versuchen oder Messungen im hohen Druckbereich oder nach Erreichen bzw. Unterschreiten eines benötigten Endvakuums vorteilhaft sein. Durch die niedrigere Drehzahl des Rotors in diesem Betriebsmodus kann der Verschleiß der Lagereinheit vermindert werden, was die Lebensdauer der Lagereinheit weiter erhöht. Ein weiterer Betriebsmodus der Vakuumpumpe kann so ausgestaltet sein, dass die Drehzahl des Rotors auf einen gewünschten Wert zwischen der Minimaldrehzahl und der Nenndrehzahl und/oder der Maximaldrehzahl einstellbar ist. Dadurch kann beispielsweise das Saugvermögen der Vakuumpumpe über eine Änderung der Drehzahl des Rotors verändert werden. Auch kann dieser Betriebsmodus ausgewählt werden, um bei großen zu evakuierenden Gaslasten die Vakuumpumpe nicht ständig an der Leistungsgrenze zu betreiben.

Ein weiterer Aspekt der vorliegenden Erfindung betrifft eine Vakuumpumpe, insbesondere eine Turbomolekularpumpe, wobei die Vakuumpumpe zumindest einen Einlass und zumindest einen Auslass umfasst, mit zumindest einem Rotor und einer Rotorwelle, die durch zumindest eine Lagereinheit drehbar gelagert ist, wobei die zumindest eine Lagereinheit ein Wälzlager umfasst, wobei der Rotor durch eine Motoreinheit zu einer Drehbewegung antreibbar ist und wobei die Motoreinheit mittels einer Steuereinheit ansteuerbar ist und wobei die Steuereinheit derart ausgebildet ist, dass sie ein erfindungsgemäßes Verfahren zum Betrieb einer Vakuumpumpe ermöglicht. Die Steuereinheit kann mit Betätigungs- oder Eingabeelementen, wie beispielsweise Taster oder Schalter, verbunden sein, über deren Betätigung die Betriebsmodi der Vakuumpumpe manuell auswählbar sind. Ein automatischer, vorprogrammierter und/oder mittels einer externen Steuereinrichtung gesteuerter Betrieb ist ebenfalls denkbar.

Nachfolgend wird die Erfindung beispielhaft anhand vorteilhafter Ausführungsformen unter Bezugnahme auf die beigefügten Figuren beschrieben. Es zeigen, jeweils schematisch:
- Fig. 1: eine perspektivische Ansicht einer Turbomolekularpumpe,
- Fig. 2: eine Ansicht der Unterseite der Turbomolekularpumpe von Fig. 1,
- Fig. 3: einen Querschnitt der Turbomolekularpumpe längs der in Fig. 2 gezeigten Schnittlinie A-A,
- Fig. 4: eine Querschnittsansicht der Turbomolekularpumpe längs der in Fig. 2 gezeigten Schnittlinie B-B,
- Fig. 5: eine Querschnittsansicht der Turbomolekularpumpe längs der in Fig. 2 gezeigten Schnittlinie C-C,

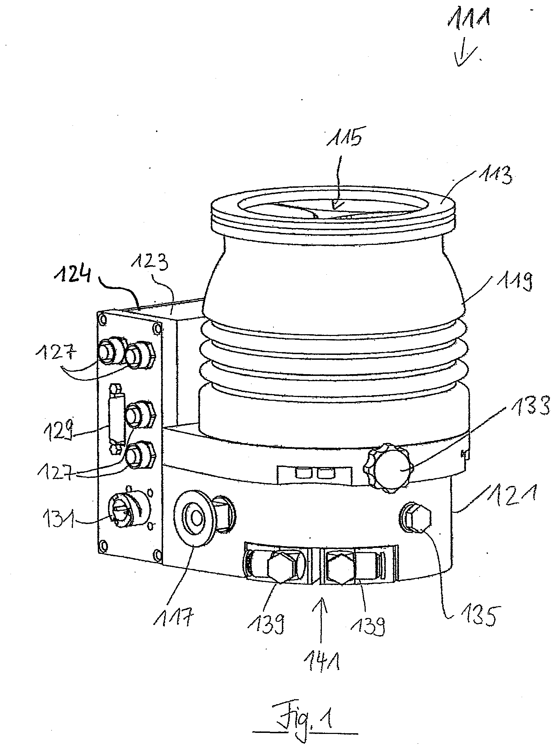

Die in Fig. 1 gezeigte Turbomolekularpumpe 111 umfasst einen von einem Einlassflansch 113 umgebenen Pumpeneinlass 115, an welchen in an sich bekannter Weise ein nicht dargestellter Rezipient angeschlossen werden kann. Das Gas aus dem Rezipienten kann über den Pumpeneinlass 115 aus dem Rezipienten gesaugt und durch die Pumpe hindurch zu einem Pumpenauslass 117 gefördert werden, an den eine Vorvakuumpumpe, wie etwa eine Drehschieberpumpe, angeschlossen sein kann.

Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein Unterteil 121, an welchem seitlich ein Elektronikgehäuse 123 angeordnet ist. In dem Elektronikgehäuse 123 sind elektrische und/oder elektronische Komponenten der Vakuumpumpe 111 untergebracht, z.B. zum Betreiben eines in der Vakuumpumpe angeordneten Elektromotors 125. Am Elektronikgehäuse 123 sind mehrere Anschlüsse 127 für Zubehör vorgesehen. Außerdem sind eine Datenschnittstelle 129, z.B. gemäß dem RS485-Standard, und ein Stromversorgungsanschluss 131 am Elektronikgehäuse 123 angeordnet.

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 vor dem von der Pumpe geförderten Gas in den Motorraum 137, in welchem der Elektromotor 125 in der Vakuumpumpe 111 untergebracht ist, gebracht werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann.

Die untere Seite 141 der Vakuumpumpe kann als Standfläche dienen, sodass die Vakuumpumpe 111 auf der Unterseite 141 stehend betrieben werden kann. Die Vakuumpumpe 111 kann aber auch über den Einlassflansch 113 an einem Rezipienten befestigt werden und somit gewissermaßen hängend betrieben werden. Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei der die Unterseite 141 nicht nach unten, sondern zur Seite gewandt oder nach oben gerichtet angeordnet werden kann.

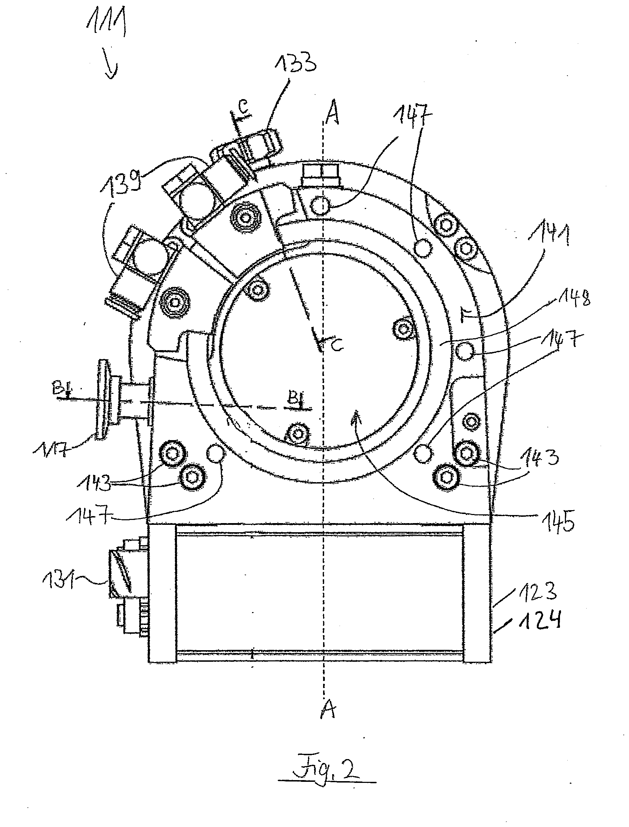

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann.

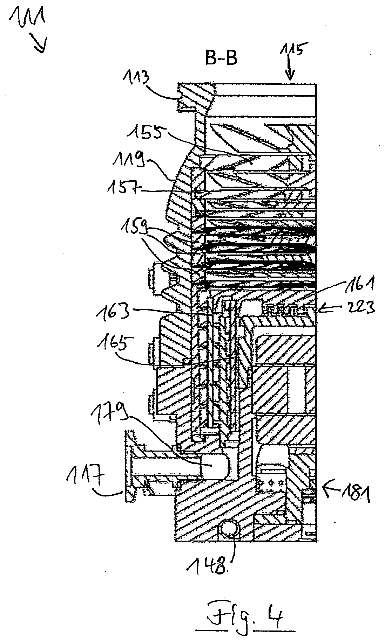

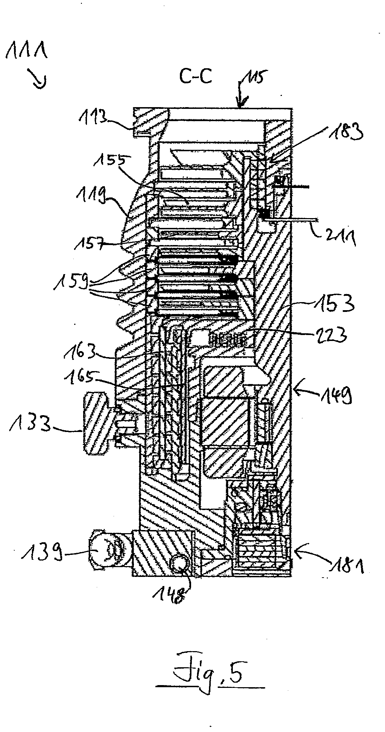

In den Figuren 2 bis 5 ist eine Kühlmittelleitung 148 dargestellt, in welcher das über die Kühlmittelanschlüsse 139 ein- und ausgeleitete Kühlmittel zirkulieren kann.

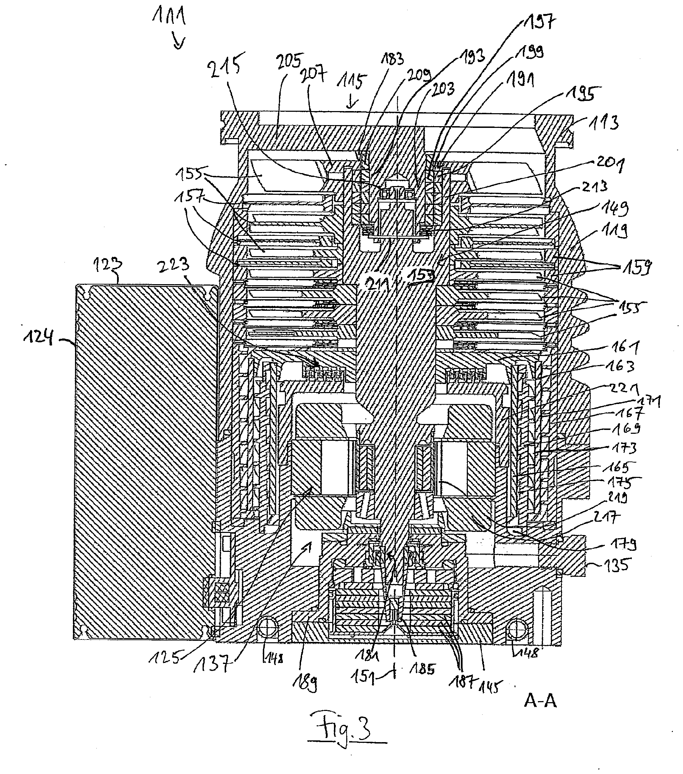

Wie die Schnittdarstellungen der Figuren 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

In dem Gehäuse 119 ist ein Rotor 149 angeordnet, der eine um eine Rotationsachse 151 drehbare Rotorwelle 153 aufweist.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen. Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende Holweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 163, 165 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben.

Zur drehbaren Lagerung der Rotorwelle 153 sind ein Wälzlager 181 im Bereich des Pumpenauslasses 117 und ein Permanentmagnetlager 183 im Bereich des Pumpeneinlasses 115 vorgesehen.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 92 zu dem Wälzlager 181 hin gefördert, wo es z.B. eine schmierende Funktion erfüllt. Das Wälzlager 181 und der Betriebsmittelspeicher sind durch einen wannenförmigen Einsatz 189 und den Lagerdeckel 145 in der Vakuumpumpe eingefasst.

Das Wälzlager 181 umfasst ein vollkugeliges Kugellager, wobei die Kugeln beispielsweise aus Stahl oder Keramik geformt sind. Durch die vollkugelige Ausbildung erzielt das Wälzlager 181 höhere Tragzahlen als vergleichbar dimensionierte Wälzlager, die mit Wälzkäfigen bestückt sind. Der Einsatz von Fett als Schmiermittel hat gegenüber einer Ölschmierung des Wälzlagers 181 den Vorteil, dass die Gefahr einer Kontamination der Hochvakuumseite durch das Schmiermittel, insbesondere bei einer nicht senkrechten Ausrichtung der Vakuumpumpe 111, vermindert wird.

Das Permanentmagnetlager 183 umfasst eine rotorseitige Lagerhälfte 191 und eine statorseitige Lagerhälfte 193, welche jeweils einen Ringstapel aus mehreren in axialer Richtung aufeinander gestapelten permanentmagnetischen Ringen 195, 197 umfassen. Die Ringmagnete 195, 197 liegen einander unter Ausbildung eines radialen Lagerspalts 199 gegenüber, wobei die rotorseitigen Ringmagnete 195 radial außen und die statorseitigen Ringmagnete 197 radial innen angeordnet sind. Das in dem Lagerspalt 199 vorhandene magnetische Feld ruft magnetische Abstoßungskräfte zwischen den Ringmagneten 195, 197 hervor, welche eine radiale Lagerung der Rotorwelle 153 bewirken. Die rotorseitigen Ringmagnete 195 sind von einem Trägerabschnitt 201 der Rotorwelle 153 getragen, welcher die Ringmagnete 195 radial außenseitig umgibt. Die statorseitigen Ringmagnete 197 sind von einem statorseitigen Trägerabschnitt 203 getragen, welcher sich durch die Ringmagnete 197 hindurch erstreckt und an radialen Streben 205 des Gehäuses 119 aufgehängt ist. Parallel zu der Rotationsachse 151 sind die rotorseitigen Ringmagnete 195 durch ein mit dem Trägerabschnitt 203 gekoppeltes Deckelelement 207 festgelegt. Die statorseitigen Ringmagnete 197 sind parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und den Ringmagneten 197 kann außerdem eine Tellerfeder 213 vorgesehen sein.

Innerhalb des Magnetlagers ist ein Not- bzw. Fanglager 215 vorgesehen, welches im normalen Betrieb der Vakuumpumpe 111 ohne Berührung leer läuft und erst bei einer übermäßigen radialen Auslenkung des Rotors 149 relativ zu dem Stator in Eingriff gelangt, um einen radialen Anschlag für den Rotor 149 zu bilden, da eine Kollision der rotorseitigen Strukturen mit den statorseitigen Strukturen verhindert wird. Das Fanglager 215 ist als ungeschmiertes Wälzlager ausgebildet und bildet mit dem Rotor 149 und/oder dem Stator einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug bemessen, sodass das Fanglager 215 im normalen Betrieb der Vakuumpumpe nicht in Eingriff gelangt, und gleichzeitig klein genug, sodass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Zwischen der Rotornabe 161 und einer den Motorraum 137 begrenzenden Wandung 221 kann außerdem eine sog. und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

Das Elektronikgehäuse 123 umfasst eine Steuereinheit 124 zur Steuerung des den Rotor 149 antreibenden Elektromotors 125. Die Steuereinheit 124 dient dazu, mittels der Steuerung des Elektromotors 125 die Drehzahl des Rotors 149 zu variieren und zu steuern, was dazu genutzt werden kann, um bestimmte Betriebsmodi der Vakkumpumpe 111 auszuführen oder in bestimmten Betriebsmodi die Pumpleistung der Vakuumpumpe 111 zu verändern, um sie den Prozessbedürfnissen anzupassen.

Hierzu kann an der Außenseite des Elektronikgehäuses 123 zumindest ein (nicht gezeigtes) Bedienelement vorgesehen sein, das mit der Steuereinheit 124 verbunden ist und durch Betätigung eine Auswahl verschiedener Betriebsmodi der Vakuumpumpe 111 ermöglicht. Das Bedienelement kann beispielsweise als Kippschalter, Druckschalter oder als Druckknopf ausgebildet sein. Es ist auch denkbar, dass die Kommunikation mit der Steuereinheit 124 ferngesteuert erfolgt, wobei über eine (nicht gezeigte) Fernsteuerungseinheit die auf ihr eingegebene Auswahl des Betriebsmodus beispielsweise über eine Kabel- oder Drahtlosverbindung an die Steuereinheit 124 übertragen wird. Beispielsweise ist denkbar, dass die Fernsteuerungseinheit als Handpanel ausgebildet ist, welches durch Kabel mit der Steuereinheit 124 verbunden ist. Auch kann die Steuerung über einen externen Rechner erfolgen, welcher über die Datenschnittstelle 129 mit der Steuereinheit 124 verbunden ist.

Mittels dieser Interaktionsmöglichkeiten lassen sich nun die verschiedenen Betriebsmodi der Vakuumpumpe 111 auswählen, wobei die Steuereinheit 124 den Elektromotor 125 so ansteuert, dass sich der Rotor 149 der Vakuumpumpe 111 mit einer dem gewählten Betriebsmodus entsprechenden Drehzahl dreht. Für zyklische Anwendungen, bei denen die Vakuumpumpe 111 nicht kontinuierlich arbeitet, sondern regelmäßig in einen lastfreien Zustand versetzt wird, sind zwei Betriebsmodi vorgesehen, die zwischen dem lastfreien Betrieb und dem Betrieb unter Last unterscheiden.

Der lastfreie Betriebsmodus kann beispielsweise während Belade- oder Umladevorgängen ausgewählt werden, in denen ein Objekt in einen, über den Einlassflansch 113 mit dem Pumpeneinlass 115 der Vakuumpumpe 111 verbundenen, Rezipienten (nicht gezeigt) eingeführt oder ersetzt wird. Ohne den Einsatz von gesonderte Vorrichtungen wie "load-lock Systemen", d.h. gesonderten, mit dem Rezipienten verbindbaren Kammersystemen, die ein Umladen des Objekts unter Beibehalten des Hochvakuums ermöglichen, wird die Vakuumpumpe 111 während des Objektwechsels über den Fluteinlass 133 oder den Sperrgasanschluss 135 geflutet, wodurch am Pumpeneinlass 115 der Vakuumpumpe 111 Atmosphärendruck anliegen kann.

Während des Umladevorgangs läuft die Vakuumpumpe im lastfreien Betriebsmodus, in dem sich der Rotor 149 der Vakuumpumpe 111 mit einer Minimaldrehzahl dreht, die beispielsweise höher als 0,1% oder 0,5% der Nenndrehzahl des Rotors 149 und kleiner als 10%, vorteilhafterweise kleiner als 5% und bevorzugt kleiner als 3% oder gar kleiner als 1% der Nenndrehzahl des Rotors 149 ist. Dabei ist die Minimaldrehzahl so groß gewählt, dass der Rotor 149 auch unter am Pumpeneinlass 115 anliegenden Atmosphärendruck nicht stehen bleibt und gleichzeitig so klein gewählt, dass der Rotor 149 unter diesen Druckbedingungen nicht zu sehr beansprucht wird, d.h. insbesondere eine Temperatur der Pumpe innerhalb gewisser Sicherheitsgrenzen bleibt. Je nach Anwendungsfall können daher auch andere Unter- und/oder Obergrenzen der Minimaldrehzahl als die beispielhaft angegebenen Werte gewählt werden.

Durch diesen Betriebsmodus wird erreicht, dass der Rotor 149 der Vakuumpumpe 111 auch im lastfreien Betrieb nicht stillsteht und damit die Wälzelemente und das Schmiermittel des vollkugeligen Lagers 181 dauerhaft in Bewegung hält. Somit wird verhindert, dass die Wälzkugeln des Kugellagers 181 aneinander reiben und aneinander stoßen, sondern ihre gleichmäßige Verteilung über den Umfang des Kugellagers 181 beibehalten, was eine Verminderung des Verschleißes und eine Verlängerung der Wartungsintervalle des Kugellagers 181 bewirkt. Ein weiterer Vorteil im Falle der Nutzung einer Fettschmierung ergibt sich aus dem Umstand, dass ein Auskühlen des Schmierfetts des Kugellagers 181 vermieden wird und die gleichmäßige Verteilung des Schmierfetts im Kugellager 181 erhalten bleibt, wodurch dieser Betriebsmodus zu einer Verminderung des Verschleißes des Schmierfetts beiträgt.

Um das nach dem Belade- oder Umladevorgang zur Untersuchung oder Bearbeitung des Objekts notwendige Vakuum zu erzeugen, kann über die Steuereinheit 124 der Betriebsmodus für den Betrieb unter Last ausgewählt werden. Die Drehzahl des Rotors 149 in diesem Betriebszustand entspricht der Nenndrehzahl, was eine schnelle Evakuierung des zu evakuierenden Rezipienten gewährleistet.

Als weiterer Betriebsmodus kann über die Steuereinheit 124 ein Stand-By Betriebsmodus der Vakuumpumpe 111 ausgewählt werden. In diesem Stand-By Betriebsmodus wird der Rotor bei einer niedrigeren Drehzahl, beispielsweise im Bereich von 20% bis 90%, insbesondere bei 63% bis 71%, z.B. etwa 67% der Nenndrehzahl betrieben, wodurch von der Vakuumpumpe 111 nicht die volle Vakuumleistung (Saugvermögen und Kompression) bereitgestellt wird. Dieser Betriebsmodus kann zur Erhaltung eines Vakuums bei längeren Messpausen dienen, aber auch bei Prozessen, Versuchen oder Messungen im hohen Druckbereich oder nach Erreichen bzw. Unterschreiten eines benötigten Endvakuums gewählt werden. Durch die niedrigere Drehzahl (d.h. das Vermeiden einer unnötigen "Volllast") wird der Verschleiß der Lagereinheit vermindert, was dazu beiträgt, deren Lebensdauer weiter zu erhöhen.

Schließlich ermöglicht die Steuereinheit 124 die Auswahl eines Betriebsmodus, in dem die Drehzahl des Rotors 149 auf einen gewünschten Wert zwischen der Minimaldrehzahl und der Nenndrehzahl und/oder der Maximaldrehzahl einstellbar ist. Durch diesen Drehzahlstellbetrieb kann beispielsweise das Saugvermögen der Vakuumpumpe über eine Änderung der Drehzahl des Rotors verändert werden. Auch kann dieser Betriebsmodus ausgewählt werden, um bei großen zu evakuierenden Gaslasten die Vakuumpumpe nicht ständig an der Leistungsgrenze zu betreiben. Die gewünschte Drehzahl lässt sich beispielsweise automatisch oder über zusätzliche Betätigungselemente (nicht gezeigt) einstellen, die beispielsweise als Drehzahlregler, Tasten oder Nummernpaneele zur Eingabe der gewünschten Drehzahl ausgeformt sein können. Darüber hinaus sind an der Außenseite des Elektronikgehäuses Anzeigen (nicht gezeigt) angebracht, die beispielsweise die gewünschte und/oder die aktuelle Drehzahl des Rotors 149 und/oder ggf. andere Betriebsparameter der Pumpe (SOLL- und/oder IST-Parameter) anzeigen, um die Überwachung der Pumpe in dem beschriebenen Betriebsmodus zu ermöglichen.

### Bezugszeichenliste

- 111: Turbomolekularpumpe
- 113: Einlassflansch
- 115: Pumpeneinlass
- 117: Pumpenauslass
- 119: Gehäuse
- 121: Unterteil
- 123: Elektronikgehäuse
- 124: Steuereinheit
- 125: Elektromotor
- 127: Zubehöranschluss
- 129: Datenschnittstelle
- 131: Stromversorgungsanschluss
- 133: Fluteinlass
- 135: Sperrgasanschluss
- 137: Motorraum
- 139: Kühlmittelanschluss
- 141: Unterseite
- 143: Schraube
- 145: Lagerdeckel
- 147: Befestigungsbohrung
- 148: Kühlmittelleitung
- 149: Rotor
- 151: Rotationsachse
- 153: Rotorwelle
- 155: Rotorscheibe
- 157: Statorscheibe
- 159: Abstandsring
- 161: Rotornabe
- 163: Holweck-Rotorhülse
- 165: Holweck-Rotorhülse
- 167: Holweck-Statorhülse
- 169: Holweck-Statorhülse
- 171: Holweck-Spalt
- 173: Holweck-Spalt
- 175: Holweck-Spalt
- 179: Verbindungskanal
- 181: Wälzlager
- 183: Permanentmagnetlager
- 185: Spritzmutter
- 187: Scheibe
- 189: Einsatz
- 191: rotorseitige Lagerhälfte
- 193: statorseitige Lagerhälfte
- 195: Ringmagnet
- 197: Ringmagnet
- 199: Lagerspalt
- 201: Trägerabschnitt
- 203: Trägerabschnitt
- 205: radiale Strebe
- 207: Deckelelement
- 209: Stützring
- 211: Befestigungsring
- 213: Tellerfeder
- 215: Not- bzw. Fanglager
- 217: Motorstator
- 219: Zwischenraum
- 221: Wandung
- 223: Labyrinthdichtung

## Patentansprüche

1. Verfahren zum Betreiben einer Vakuumpumpe (111), insbesondere einer Turbomolekularpumpe, wobei die Vakuumpumpe (111) zumindest einen Einlass (115), zumindest einen Auslass (117) und einen Rotor (149) mit einer Rotorwelle (153) umfasst, die durch zumindest eine Lagereinheit drehbar gelagert ist, wobei die zumindest eine Lagereinheit zumindest ein Wälzlager (181) umfasst, wobei der Rotor (149) durch eine Motoreinheit (125) zu einer Drehbewegung antreibbar ist,
**dadurch gekennzeichnet, dass**
die Motoreinheit (125) mittels einer Steuereinheit (124) in einem lastfreien Betriebsmodus der Vakuumpumpe (111) derart angesteuert wird, dass sich der Rotor (149) mit einer Minimaldrehzahl dreht, wobei die Minimaldrehzahl des Rotors (149) weniger als 10%, insbesondere weniger als 5%, bevorzugt weniger als 3% einer Nenndrehzahl beträgt und dass die Minimaldrehzahl des Rotors mehr als 0,1%, insbesondere mehr als 0,5% der Nenndrehzahl oder beträgt.

2. Verfahren nach Anspruch 1,
**dadurch gekennzeichnet, dass**
die Drehzahl des Rotors (149) bei einem zyklischen Betrieb der Vakuumpumpe (111) mit Wechseln zwischen einem lastfreien Betriebsmodus und einem Betriebsmodus unter Last von einer Minimaldrehzahl auf eine Nenndrehzahl gebracht wird, und umgekehrt.

3. Verfahren nach zumindest einem der vorstehenden Ansprüche,
**dadurch gekennzeichnet, dass**
in dem lastfreien Betriebsmodus an zumindest einem Einlass (115) der Vakuumpumpe (111) Atmosphärendruck anliegt.

4. Verfahren nach zumindest einem der vorstehenden Ansprüche,
**dadurch gekennzeichnet, dass**
das zumindest eine Wälzlager (181) ein vollkugeliges Kugellager oder ein vollrolliges Wälzlager ist.

5. Verfahren nach zumindest einem der vorstehenden Ansprüche,
**dadurch gekennzeichnet, dass**
das zumindest eine Wälzlager (181) im Bereich von Wälzkörpern des Wälzlagers (181) mit einem Dauerschmiermittel, insbesondere Fett, zumindest teilweise gefüllt und geschmiert wird, insbesondere wobei das Wälzlager (181) nach außen hin abgedichtet ist.

6. Verfahren nach zumindest einem der vorstehenden Ansprüche,
**dadurch gekennzeichnet, dass**
zumindest eine erste Lagereinheit zur Lagerung der Rotorwelle (153) einem Hochvakuumbereich, insbesondere dem wenigstens einem Einlass (115) zugeordnet ist und eine zweite Lagereinheit zur Lagerung der Rotorwelle (153) einem Vorvakuumbereich, insbesondere dem wenigstens einem Auslass (117) zugeordnet ist, wobei die erste Lagereinheit ein schmiermittelfreies Lager (183), insbesondere ein Permanentmagnetlager ist.

7. Verfahren nach zumindest einem der vorstehenden Ansprüche 1 bis 5,
**dadurch gekennzeichnet, dass**
zumindest zwei Lagereinheiten zur Lagerung der Rotorwelle (153) im Vorvakuumbereich angeordnet sind, der insbesondere dem wenigstens einem Auslass (117) zugeordnet ist, wobei zumindest zwei dieser Lagereinheiten jeweils zumindest ein Wälzlager (181) umfassen.

8. Verfahren nach zumindest einem der vorstehenden Ansprüche,
**dadurch gekennzeichnet, dass**
zusätzliche Betriebsmodi vorgesehen sind, bei denen die Drehzahl des Rotors (149) zwischen der Minimaldrehzahl und der Nenndrehzahl liegt.

9. Vakuumpumpe (111), insbesondere Turbomolekularpumpe, wobei die Vakuumpumpe (111) zumindest einen Einlass (115), zumindest einen Auslass (117) und einen Rotor (149) mit einer Rotorwelle (153) umfasst, die durch zumindest eine Lagereinheit drehbar gelagert ist, wobei die zumindest eine Lagereinheit ein Wälzlager (181) umfasst, wobei der Rotor (149) durch eine Motoreinheit (125) zu einer Drehbewegung antreibbar ist und wobei die Motoreinheit (125) mittels einer Steuereinheit (124) ansteuerbar ist, die derart ausgebildet ist, ein Verfahren nach einem der Ansprüche 1 bis 8 durchzuführen.

## Claims

1. A method of operating a vacuum pump (111), in particular a turbomolecular pump, wherein the vacuum pump (111) comprises at least one inlet (115); at least one outlet (117); and a rotor (149) having a rotor shaft (153) which is rotatably supported by at least one bearing unit, wherein the at least one bearing unit comprises at least one rolling element bearing (181), and wherein the rotor (149) is drivable by a motor unit (125) to make a rotational movement,
**characterized in that**
the motor unit (125) is controlled by means of a control unit (124) in a load-free operating mode of the vacuum pump (111) such that the rotor (149) rotates at a minimum rotational speed, with the minimum rotational speed of the rotor (149) amounting to less than 10%, in particular to less than 5%, preferably to less than 3%, of a nominal rotational speed; and **in that** the minimum rotational speed of the rotor amounts to more than 0.1%, in particular to more than 0.5%, of the nominal rotational speed.

2. A method in accordance with claim 1,
**characterized in that**
the rotational speed of the rotor (149) is brought from a minimum rotational speed to a nominal rotational speed, and vice versa, in a cyclic operation of the vacuum pump (111) with changes between a load-free operating mode and an operating mode under load.

3. A method in accordance with at least one of the preceding claims,
**characterized in that**
atmospheric pressure is applied to at least one inlet (115) of the vacuum pump (111) in the load-free operating mode.

4. A method in accordance with at least one of the preceding claims,
**characterized in that**
the at least one rolling element bearing (181) is a fully spherical ball bearing or a full complement rolling element bearing.

5. A method in accordance with at least one of the preceding claims,
**characterized in that**
the at least one rolling element bearing (181) is at least partly filled and lubricated with a permanent lubricant, in particular grease, in the region of rolling elements of the rolling element bearing (181), in particular with the rolling element bearing (181) being sealed toward the outside.

6. A method in accordance with at least one of the preceding claims,
**characterized in that**
at least one first bearing unit for supporting the rotor shaft (153) is associated with a high-vacuum region, in particular with the at least one inlet (115), and a second bearing unit for supporting the rotor shaft (153) is associated with a pre-vacuum region, in particular with the at least one outlet (117), with the first bearing unit being a lubricant-free bearing (183), in particular a permanent magnet bearing.

7. A method in accordance with at least one of the preceding claims 1 to 5,
**characterized in that**
at least two bearing units for supporting the rotor shaft (153) are arranged in the pre-vacuum region, which is in particular associated with the at least one outlet (117), with at least two of these bearing units each comprising at least one rolling element bearing (181).

8. A method in accordance with at least one of the preceding claims,
**characterized in that**
additional operating modes are provided in which the rotational speed of the rotor (149) lies between the minimum rotational speed and the nominal rotational speed.

9. A vacuum pump (111), in particular a turbomolecular pump, wherein the vacuum pump (111) comprises at least one inlet (115); at least one outlet (117); and a rotor (149) having a rotor shaft (153) which is rotatably supported by at least one bearing unit, wherein the at least one bearing unit comprises a rolling element bearing (181), wherein the rotor (149) is drivable by a motor unit (125) to make a rotational movement, and wherein the motor unit (125) is controllable by means of a control unit (124) which is configured to carry out a method in accordance with any one of the claims 1 to 8.

## Revendications

1. Procédé pour faire fonctionner une pompe à vide (111), en particulier une pompe turbomoléculaire, la pompe à vide (111) comprenant au moins une entrée (115), au moins une sortie (117) et un rotor (149) ayant un arbre de rotor (153) qui est monté mobile en rotation par au moins une unité formant palier, ladite au moins une unité formant palier comprenant au moins un palier de roulement (181), le rotor (149) pouvant être entraîné en rotation par un ensemble moteur (125),
**caractérisé en ce que**
l'ensemble moteur (125) est piloté au moyen d'une unité de commande (124) dans un mode de fonctionnement sans charge de la pompe à vide (111), de telle sorte que le rotor (149) tourne à une vitesse de rotation minimale, la vitesse de rotation minimale du rotor (149) étant inférieure à 10 %, en particulier inférieure à 5 %, de préférence inférieure à 3 % d'une vitesse de rotation nominale, et **en ce que**
la vitesse de rotation minimale du rotor est supérieure à 0,1 %, en particulier supérieure à 0,5 % de la vitesse de rotation nominale.

2. Procédé selon la revendication 1,
**caractérisé en ce que**
lors d'un fonctionnement cyclique de la pompe à vide (111) alternant entre un mode de fonctionnement sans charge et un mode de fonctionnement sous charge, la vitesse de rotation du rotor (149) est amenée d'une vitesse de rotation minimale à une vitesse de rotation nominale, et inversement.

3. Procédé selon l'une au moins des revendications précédentes,
**caractérisé en ce que**
en mode de fonctionnement sans charge, une pression atmosphérique s'applique à ladite au moins une entrée (115) de la pompe à vide (111).

4. Procédé selon l'une au moins des revendications précédentes,
**caractérisé en ce que**
ledit au moins un palier de roulement (181) est un roulement à billes jointives ou un roulement à rouleaux jointifs.

5. Procédé selon l'une au moins des revendications précédentes,
**caractérisé en ce que**
ledit au moins un palier de roulement (181) est au moins partiellement rempli et lubrifié avec un lubrifiant permanent, en particulier de la graisse, dans la zone des corps roulants du palier de roulement (181), en particulier le palier de roulement (181) étant étanche vers l'extérieur.

6. Procédé selon l'une au moins des revendications précédentes,
**caractérisé en ce que**
au moins une première unité formant palier pour supporter l'arbre de rotor (153) est affectée à une zone de vide poussé, en particulier à ladite au moins une entrée (115), et une deuxième unité formant palier pour supporter l'arbre de rotor (153) est affectée à une zone de vide préliminaire, en particulier à ladite au moins une sortie (117), la première unité formant palier étant un palier sans lubrifiant (183), en particulier un palier à aimant permanent.

7. Procédé selon l'une au moins des revendications précédentes 1 à 5,
**caractérisé en ce que**
au moins deux unités formant palier pour supporter l'arbre de rotor (153) sont disposées dans la zone de vide préliminaire qui est affectée en particulier à ladite au moins une sortie (117), au moins deux de ces unités formant palier comprenant chacune au moins un palier de roulement (181).

8. Procédé selon l'une au moins des revendications précédentes,
**caractérisé en ce que**
il est prévu des modes de fonctionnement supplémentaires dans lesquels la vitesse de rotation du rotor (149) se situe entre la vitesse de rotation minimale et la vitesse de rotation nominale.

9. Pompe à vide (111), en particulier pompe turbomoléculaire, la pompe à vide (111) comprenant au moins une entrée (115), au moins une sortie (117) et un rotor (149) ayant un arbre de rotor (153) qui est monté mobile en rotation par au moins une unité formant palier, ladite au moins une unité formant palier comprenant un palier de roulement (181), le rotor (149) pouvant être entraîné en rotation par un ensemble moteur (125), l'ensemble moteur (125) pouvant être piloté au moyen d'une unité de commande (124) réalisée de manière à permettre de mettre en œuvre un procédé selon l'une des revendications 1 à 8.
